(19) Europäisches Patentamt
European Patent Office
Office européen des brevets

(11) Publication number: **0 226 176 B1**

(12) **EUROPEAN PATENT SPECIFICATION**

(45) Date of publication of patent specification: **07.04.93**

(51) Int. Cl.5: **C08G 18/79**, C08J 5/08, C08K 3/00, C08L 75/04, C08G 18/10

(21) Application number: **86117195.7**

(22) Date of filing: **10.12.86**

The file contains technical information submitted after the application was filed and not included in this specification

(54) **High-density composite material essentially based on polyisocyanurate.**

(30) Priority: **10.12.85 IT 2315685**

(43) Date of publication of application: **24.06.87 Bulletin 87/26**

(45) Publication of the grant of the patent: **07.04.93 Bulletin 93/14**

(84) Designated Contracting States: **AT BE CH DE ES FR GB LI NL SE**

(56) References cited:
**DE-A- 2 014 899**
**GB-A- 1 323 312**
**US-A- 3 817 939**
**US-A- 3 842 036**

(73) Proprietor: **Montedison S.p.A.**
**31, Foro Buonaparte**
**I-20121 Milan(IT)**

(72) Inventor: **Bianchin, Eugenio**
**7, via Monfenera**
**I-31100 Treviso(IT)**
Inventor: **Lunardon, Gianflavio**
**26, via Milazzo**
**I-35100 Padova(IT)**
Inventor: **Serra, Vincenzo**
**56/1, via Compagnoni**
**I-44100 Ferrara(IT)**
Inventor: **Longo, Giovanni**
**4, via Nicolò Tommaseo**
**I-30038 Spinea(IT)**
Inventor: **Credali, Lino**
**22, via Calari**
**I-40033 Casalecchio di Reno/Bologna(IT)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40 (DE)**

**EP 0 226 176 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Polymeric matrices, which are suitable for producing materials reinforced with glass fibres or with other inorganic or organic fillers and which have very high mechanical (structural) characteristics when they are utilized according to the SMC (Sheet Moulding Compounds) or analogous techniques (flow moulding, bulk moulding compounds, etc.) are known. Generally, polyester and polyepoxy matrices are utilized. So far, no analogous results could be obtained by using polymeric matrices derived from isocyanates (polyurethane matrices, polyureic matrices, etc.), the main reasons being, for example:

a) Utmost difficulties in obtaining monocomponent fluid mixtures which are stable in the long run (as is required by the SMC technique), and which, simultaneously, contain isocyanates and compounds capable of reacting with the isocyanates;

b) Difficulties in obtaining monocomponents of the above-mentioned type which are capable of reacting and completely polymerizing under the very restricted time and temperature conditions imposed by the application technologies;

c) Difficulties in obtaining isocyanate-based mixtures of the desired type which are capable of impregnating high amounts of reinforcing agents (glass fibres or other agents) particularly, when they are longer than 1 cm, and in moulding the resulting mixture by means of known techniques (SMC and the like);

d) Difficulties in obtaining, through the methods described above and starting from matrices of the conventional polyurethane or polyurea type, composite materials having the very good mechanical properties required for appliances generally coated with SMC-polyester or SMC-polyepoxide matrices. This is also due to the fact that only by using compact or nearly compact reinforcing agents, it is possible to reach the required levels of rigidity, thermal stability and impact strength. The prior art only describes examples of mean and low density reinforced rigid products (<500 kg/$m^3$), predominantly reinforced with short fibres (≦1 cm) and substantially based on the formation of conventional polyurethane structures.

Also known are techniques suitable for the production of foamed resins based on polyisocyanurate (PIR foams) having a very low density but mechanical properties which are far from being of the structural type, their importance residing mainly in their insulating capability along with a high stability to heat and to chemical or environmental agents.

US-A-3,817,939 describes a method of making poly(isocyanurateurethane) comprising mixing polyisocyanate with polyol in the presence of an effective amount of a certain carbonate salt polymerization catalyst. The corresponding product is suitable for use in liquid coating compositions.

DE-A-20 14 899 describes an isocyanurate polymer which is a product of the curing of a urethane prepolymer having terminal isocyanate groups and cyclic groups in the polymeric chain with an isocyanate trimerization catalyst. Said prepolymer is prepared by reaction of a diol with a molar excess of a diisocyanate, the ratio hydroxy groups/isocyanate groups ranging preferably from 1.3:1 to 2:1. A corresponding fiber-reinforced product is also disclosed.

GB-A-1,323,312 describes a process for preparing a cross-linked urethane/isocyanurate polymer which process comprises reacting (1) a polyisocyanate compound comprising an isocyanate-capped prepolymer of a polyalkylene ether polyol or polyester polyol and (2) a polyol component comprising a polyalkylene ether polyol of molecular weight up to 5000 in the presence of a certain isocyanate polymerization catalyst.

US-A-3,842,036 discloses a reaction product of (a) an alkylene oxide condensate of a novolak, (b) a stoichiometric excess of an organic polyisocyanate and (c) a catalytically effective quantity of a catalyst for promoting the formation of isocyanurate from isocyanate, said reaction product being subjected to heat and cooled before reaching the thermoset stage.

Applicant has now succeeded in preparing high density composite materials reinforced with glass fibres or other agents, starting from specific polymeric matrices derived from isocyanates, in particular, essentially polyisocyanurate matrices having structural characteristics comparable with or better than those obtainable with the alternative matrices mentioned above, following the modalities and the typical characteristics of the SMC technology or of similar technologies.

In the widest sense, the present invention relates to a high-density composite material essentially based on polyisocyanurate, having a density of ≧500 and, preferably ≧1000 kg/$m^3$, containing reinforcing fillers, in which the polyisocyanurate matrix is derived from a repeating structural unit having the formula:

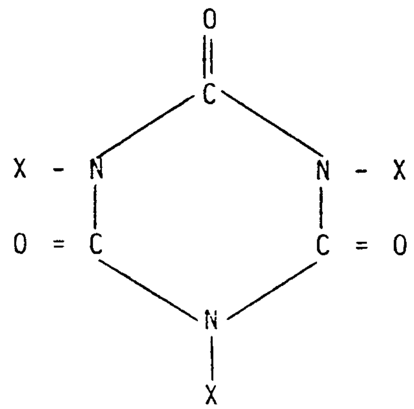

(I)

wherein at least one group X represents the group
$-R_1-NCO$ and at least one group X represents the group
$-R_1-NH-CO-OR_2-(-OCO-NH-R_1-NCO)_n$, in which n is an integer of from 1 to 8, preferably of from 1 to 3, $R_1$ is an aliphatic, cycloaliphatic, aromatic or mixed group containing up to 20 carbon atoms and $R_2$, the same as or different from $R_1$, is an aliphatic, cycloaliphatic, aromatic or mixed group containing up to 20 carbon atoms or, also, a carbonic, siloxane, silane or corresponding mixed group; which composite material is obtainable by the process specified below. According to a preferred embodiment, in the repeating structural unit of formula (I), on the average two groups X represent the group $-R_1NCO$ and the third group X represents the radical $-R_1-NH-CO-OR_2-(-OCO-NH-R_1-NCO)_n$.

The amount of reinforcing filler in the composite material usually ranges from 5 to 85% by weight, preferably from 30 to 70 % by weight.

From a technological point of view, said composite material exhibits an exceptional validity and, in particular, possesses the following characteristics:

| | |
|---|---|
| Flexural elastic modulus (ASTM D 790) | ≧ 4000 N/mm$^2$ |
| preferably | ≧ 5000 N/mm$^2$ |
| and even more preferably | ≧ 20000 N/mm$^2$ |

| IZOD notch resilience | |
|---|---|
| at room temperature (ASTM D 256) | ≧ 100 J/m |
| preferably | ≧ 200 J/m |
| and even more preferably | ≧ 500 J/m. |

The heat distortion temperature (HDT at 1.8 N/mm$^2$; ASTM D 648) of said composite material is > 150°C and, preferably ≧ 220°C.

Said composite materials exhibit an optimum surface appearance and a high glass transition temperature. They belong to the class of the thermosetting resins and can advantageously be utilized in a wide range of applications such as, for example, in the automobile industry, building industry, electrodomestic goods, rigid packings, etc.

An essential feature of the present composite materials is the process by which they are obtainable, said process comprises the use of particular prepolymers, prepared by partial addition of polyisocyanates and polyols which remain fluid at room temperature, even in the presence of cross-linking catalysts, for at least a few days and, in any case, for a time more than sufficient to accomplish the impregnation of the glass fibres and/or of a different filler and until moulding is carried out.

In particular, the process for preparing the above composite materials is carried out in three distinct steps as follows:

In a first step, a partially polymerized urethane system (prepolymer) is prepared by condensing a polyisocyanate such as, for example, 4,4'-diphenylmethane-diisocyanate and/or its 2,4'-isomer with polyols having a functionality of at least 2 and having a wide range of molecular weights with a polyisocyanate/polyol equivalent ratio higher than 2. Thereby a stable and fluid mixture is obtained which contains free polyisocyanate and NCO-terminated urethane compound. In the preparation of thermosetting

resins, polyols having a functionality equal to or higher than 3, in particular triols derived from glycerin or from trimethylolpropane, are usually utilized.

In a second step, the resulting mixture is mixed with a cross-linking catalyst which is active at temperatures above 80°C and which can be of organic, inorganic, metallorganic or metallic origin. The matrix thus prepared is utilized to impregnate a support consisting of chopped glass fibres or of glass fibre cloth or of any other reinforcing material (for example carbon fibres or aramide fibres). In this way, pastes, sheets or other shaped articles, which are usually called "pre-impregnated" articles or materials, are obtained. In the case of chopped fibres it is possible to first prepare a concentrate, for example, at 85% by weight of fibre. Then the concentrate is diluted with a pure prepolymer until the intended concentration (5 to 85%, preferably 30 to 70% by weight of reinforcing material, based on the total weight) is reached. Generally, it is preferred to use glass fibres whose surface is coated with substances capable of imparting compatibility with the matrix, said fibres having diameters of from 8 to 30 $\mu$m, preferably of from 10 to 18 $\mu$m, and lengths of from 1 to 100 mm, preferably of from 5 to 50 mm.

In the third step said pre-impregnated materials are polymerized in a mould at 80 to 200°C (preferably at 100 to 150°C), in any case at temperatures which depend on the type of catalyst, on the type of isocyanate employed, on the polyols and on the pressure, which must be high enough to eliminate blemishes on the surface of the composite articles. Furthermore, it is necessary to reduce as far as possible the possibility of water absorption or of atmospheric humidity absorption by operating in a protective atmosphere. Prior to moulding, it is possible to add the usual additives, for example, pigments and/or flame-retarding agents.

As regards the operative conditions of the first step, it is recommended that the operation be carried out at 50 to 90°C, preferably under vacuum or in an inert gas such as $N_2$, for a time of from 5 minutes to 3 hours, using reaction mixtures in which a stoichiometric excess of polyisocyanate with respect to polyol is present.

Under these conditions an A + B blend (prepolymer) is obtained in which:

A = $OCN\text{-}R_1\text{-}NCO$ (polyisocyanate in the free state) (IV)

B = $OCN\text{-}R_1\text{-}NH\text{-}CO\text{-}OR_2\text{-}(\text{-}OCN\text{-}NH\text{-}R_1\text{-}NCO)_n$ (urethane compound) (V)

Subsequently, under the act ion of heat and after addition of a cross-linking catalyst (activator), of the reinforcing fillers and/or of inert fillers and of other optional additives, the blends are converted to a compound having predominantly a polyisocyanurate structure, the structural unit of which can be represented as follows:

$$2\ (OCN\text{-}R_1\text{-}NCO) + OCN\text{-}R_1\text{-}NH\text{-}CO\text{-}OR_2\text{-}(\text{-}OCO\text{-}NH\text{-}R_1\text{-}NCO)_n \longrightarrow$$

(II) (III)

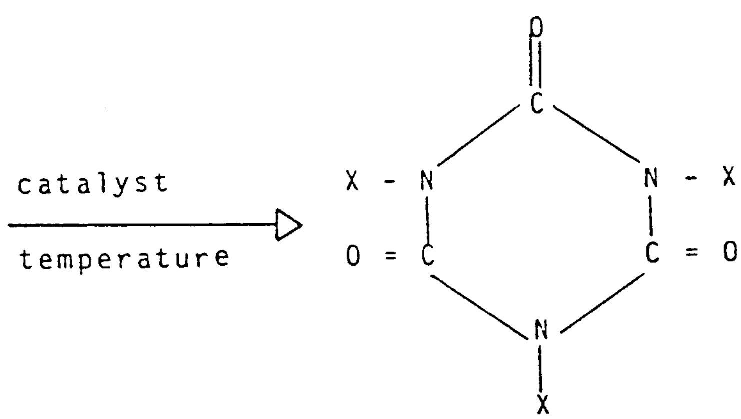


(I)

wherein X can be either of the following groups:

a) $-R_1\text{-}NCO$;

b) $-R_1$-NH-CO-$OR_2$-(-OCO-NH-$R_1$-NCO$)_n$;
in the reaction ratio.

The final structure is a tridimensional lattice, obtained from the polyaddition of structural unit (I), according to mechanisms analogous to those described above, until a practically complete conversion of the residual -NCO groups is reached. In other words, in the first two process steps a pre-impregnated material is obtained which, in the moulding step, is cured at a high temperature within a very short time (0.5 to 4 minutes).

An alternative process for obtaining the composite of the present invention comprises:

a) Preparing a mixture which contains a polyisocyanate of formula (IV), a urethane compound of formula (V), and one or more reinforcing materials, optionally along with organic and/or inorganic fillers and with plastic and/or elastomeric materials;

b) Heating the resulting mixture to a temperature of from 80 to 220°C after having added a cross-linking catalyst which acts at temperatures above 80°C. In this case as well the added amount of reinforcing material ranges from 5 to 85% by weight, preferably from 30 to 70% by weight.

Various polyols may be used in the process according to the present invention, optionally in admixture with suitable antioxidants. In principle, any diol, triol or polyol with four or more hydroxyl end groups can be advantageously used. Excellent results have been obtained by using polyolpolyethers derived from the condensation of glycerin, of trimethylol-propane or of pentaerythritol with alkylene oxides such as ethylene oxides, propylene oxides, butylene oxides, etc., or with polyoxyalkylene chains (polyoxyethylene, polyoxypropylene, polyoxybutylene chains, mixed oxyethylene-oxypropylene chains etc.). According to a preferred but not limiting embodiment of the invention it is possible to use mixtures containing two triols having a mean molecular weight ranging from 250 to 10000, preferably from 250 to 7000, namely:

i) a first triol, having a lower molecular weight than the second triol and composed of glycerin and/or trimethylolpropane condensed with propylene oxide and/ or ethylene oxide;

ii) a second triol, having a higher molecular weight than the first triol, composed of glycerin and/or trimethylolpropane, etherified with mixed oxyethyleneoxypropylene chains, with propylene oxide/ethylene oxide weight ratios ranging from 95/5 to 20/80; the weight ratio

$$\frac{\text{triol of type i)}}{\text{triol of type ii)}}$$

being preferably in the range of from 70:30 to 10:90.

As is known to those skilled in the art, the above-mentioned polyols can be substituted by analogous compounds in which the hydroxyl end groups are substituted by amine groups ($NH_2$). Furthermore, the above-mentioned polyol polyethers can be substituted by polyol polyesters, by polyol polythioethers and by all the other polyols which are cited, for example, in EP-A-12 417.

There are also various polyisocyanates which may be employed in the process of the present invention. Examples of suitable polyisocyanates are 4,4'- and 2,4'-diphenylmethane-diisocyanate, toluene-diisocyanate (TDI), 1,4-tetramethylene-diisocyanate, 1,6-hexamethylene-diisocyanate, p- or m-phenylene-diisocyanate, 1-chlorophenylene-2,4-diisocyanate, 1,5-naphthalene-diisocyanate, diphenyl-4,4'-diisocyanate, 1,4- or 1,2-cyclohexylene-diisocyanate and/or polyisocyanates having a functionality higher than 2, such as polyphenylmethane polyisocyanates.

A necessary condition for obtaining isocyanurate structures of formula (I) is that the equivalent ratio of polyisocyanate to polyol is higher than 2.

Finally, there are various cross-linking activators (catalysts) of organic, inorganic, metallorganic or metallic nature which are utilizable for moulding the pre-impregnated materials. Preferred is the use of the lead and bismuth compounds described by J.W. Britain and P.G. Gemeinhardt in J. Appl. Polym. Sci., Volume 4, (1960), pages 207 to 211 or of particular metallorganic compounds based on Ti, V, Co, Ni, Sn, optionally in admixture with amines. Optimum results were obtained by using lead stearate, oleate and 2-ethyl hexanoate.

Reinforcing materials to be used in the preparation of the pre-impregnated materials may, besides glass fibres and/or cloths, be other types of organic or inorganic fibres or cloths, for example, carbon fibres or polyamide fibres (in particular aromatic polyamide fibres), crystalline polyolefinic fibres, polyester, rock wool, etc. It is also possible to utilize inorganic or organic fillers such as talc, calcium carbonate or phosphate, silicas, aluminas, cements, zeolites, kieselguhrs, wood meals, cellulose, amides and the like. Finally, in order to improve mechanical characteristics, it may be useful to incorporate plastic and/or

elastomeric materials of different nature. In particular, the incorporation of plastic materials or elastomers, optionally cross-linked, such as ABS, polycarbonates, polyesters, polyamides, elastomeric polyesters, butadiene rubber or SBR, polyurethane elastomers, nitrile rubbers, ethylene-propylene rubbers, acrylic rubbers etc., in the form of discrete particles (mean diameter: 0.01 to 10 $\mu$m) results in the final article being endowed with improved impact strength.

The following examples illustrate the present invention without, however, limiting the scope thereof.

EXAMPLE 1

70 g of 4,4'-diphenylmethane-diisocyanate (MDI) were condensed at 80 °C for 2.5 hours with 20 g of a trifunctional polyether polyol having a molecular weight of about 5000, consisting of glycerin etherified with mixed oxyethylene-oxypropylene chains and with 10 g of a trifunctional polyether polyol based on oxypropylene having a molecular weight of about 300, prepared by condensing glycerin with propylene oxide. The product was then deaerated under vacuum at 70 °C. Thus, a prepolymer having a viscosity of from 7000 to 8000 mPa.s (at 23 °C) with a content of free NCO groups of about 18% by weight was obtained. 1.5% by weight of Pb stearate was then added as a catalyst and the mass was homogenized in a vessel equipped with a stirrer, taking care to carry out the operation under vacuum. This prepolymer was used to impregnate one continuous glass fibre cloth having a thickness varying from 0.1 to 0.2 mm. Further preimpregnated cloths were then superimposed in a number sufficient for the final composite to have the predetermined thickness and fibre content. The combination was introduced into a mould heated at 120 °C and was then compressed at 45 bar. The article was withdrawn after 3.5 minutes and the compact composite obtained exhibited the following characteristics:

| | |
|---|---|
| Glass fibre content | 80% by weight |
| Thickness of the composite | 1.3 mm |
| Flexural elastic modulus | $2.6 \times 10^4$ N/mm$^2$ |
| Bending strength | 400 N/mm$^2$ |
| Tensile strength | 150-200 N/mm$^2$ |
| Izod resilience (with notched bar, at room temperature) | 900-1000 J/m |
| Heat distortion temperature (HDT at 1.8 N/mm$^2$) | 220 °C |
| (Shore)hardness | 90-92 D. |

EXAMPLE 2

To the prepolymer prepared according to example 1 were added glass fibres having a mean diameter of 12 um and a mean length of 6 mm, in a weight ratio of 40/60, based on the matrix, and 1.5% by weight of lead stearate. The operation took place in a mixer under vacuum. The paste thus obtained was moulded under conditions described in example 1 but employing a time of 2.5 minutes. An article having the following characteristics was obtained:

| | |
|---|---|
| Glass fibre content | 40% by weight |
| Flexural elastic modulus | 5000 N/mm$^2$ |
| Bending strength | 100-150 N/mm$^2$ |
| HDT (at 1.8 N/mm$^2$) | 200 °C |
| IZOD resilience | 200 J/m |
| (Shore)hardness | 85-87 D |

EXAMPLE 3

To the paste obtained according to example 2 a finely-dispersed acrylic rubber (mean diameter of the particles = 0.5 $\mu$m) was added in a weight ratio of 10/90 with respect to the paste. The resulting blend was moulded as in example 2 (time = 2.5 minutes). An article having the following characteristics was obtained:

| | |
|---|---|
| Flexural elastic modulus | 4700 N/mm$^2$ |
| HDT (at 1.8 N/mm$^2$) | 190 °C |
| IZOD resilience | 400 J/m |
| (Shore)hardness | 82-85 D. |

EXAMPLE 4

30 parts by weight of glass fibres having a mean diameter of 12 µm and a mean length of 25 mm were impregnated with 70 parts by weight of a blend prepared by mixing 100 parts of the prepolymer obtained according to example 1 with 50 parts of $CaCO_3$ as an inert filler and with 1 part of lead stearate as a catalyst. The mixture was then subjected to moulding by means of heat compression at 120 °C and 100 bar, thus obtaining round articles having a thickness of 3 mm, a diameter of 25 mm and the following characteristics:

| | |
|---|---|
| Flexural elastic modulus | 9600 N/mm$^2$, |
| Bending strength | 250 N/mm$^2$ |
| IZOD resilience | 600 J/m |
| HDT (at 1.8 N/mm$^2$) | 200 °C |

## Claims

**1.** Composite material based on polyisocyanurates and containing reinforcing fillers, in which the polyisocyanurate matrix is derived from a repeating structural unit having the formula:

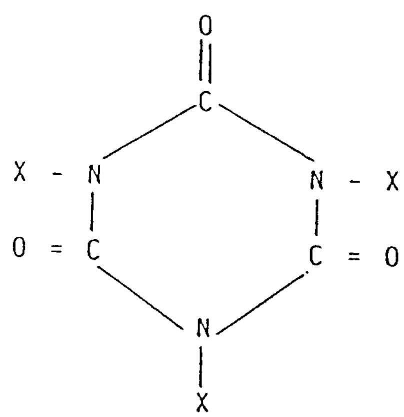

(I)

wherein, on the average, at least one group X represents the group $-R_1-NCO$ and at least one group X represents the group $-R_1-NH-CO-OR_2-(-OCO-NH-R_1-NCO)_n$, in which n is an integer of from 1 to 8, $R_1$ is an aliphatic, cycloaliphatic, aromatic or corresponding mixed group containing up to 20 carbon atoms and $R_2$, the same or different from $R_1$, is an aliphatic, cycloaliphatic, aromatic or corresponding mixed group containing up to 20 carbon atoms, or also a carbonic, siloxane, silane or corresponding mixed group;

and is obtainable by a process comprising the steps of

a) condensing a polyisocyanate with a polyol having a functionality of at least 2, in a polyisocyanate/polyol equivalent ratio of higher than 2, whereby a stable and fluid mixture is obtained which contains free polyisocyanate and NCO-terminated urethane compound;

b) mixing the mixture obtained in step a) with a cross-linking catalyst which is active at temperatures higher than 80 °C and impregnating the resulting mixture with at least one reinforcing mate

**2.** Composite material according to claim 1, wherein n ranges from 1 to 3.

**3.** Composite material according to any one of claims 1 and 2, in which, on the average, two groups X represent the group $-R_1-NCO$ and one group X represents the group $-R_1-NH-CO-OR_2-(-OCO-NH-R_1-NCO)_n$ in the repeating structural unit of formula (I).

**4.** Composite material according to any one of claims 1 to 3, in which the amount of reinforcing fillers ranges from 5 to 85% by weight, based on the total weight of the composite material.

**5.** Composite material according to claim 4, wherein the amount of reinforcing fillers ranges from 30 to 70% by weight.

**6.** Composite material according to any one of the preceding claims, having the following characteristics:

| | |
|---|---|
| Flexural elastic modulus | ≧ 4000 N/mm$^2$ |
| IZOD resilience | ≧ 100 J/m. |

**7.** Composite material according to claim 6, having the following characteristics:

| | |
|---|---|
| Flexural modulus | ≧ 5000 N/mm$^2$ |
| IZOD resilience | ≧ 200 J/m. |

**8.** Composite material according to claim 6 or 7 in which the heat distortion temperature is > 150 °C.

**9.** Composite material according to any one of the preceding claims wherein the reinforcing fillers are selected from glass fibers and/or cloths, carbon fibers, polyamide fibers, in particular, fibers of aromatic polyamides, crystalline polyolefinic fibers, polyester fibers and rock wool.

**10.** Composite material according to any one of the preceding claims wherein said reinforcing fillers consist of chopped glass fibers having a mean diameter of from 8 to 30 µm and a mean length of from 1 to 100 mm.

**11.** Composite material according to claim 10 wherein said chopped glass fibers have a mean diameter of from 10 to 18 µm and/or a mean length of from 5 to 50 mm.

**12.** Composite material according to any one of the preceding claims additionally containing organic and/or inorganic rial, whereby a pre-impregnated material is obtained;
c) polymerizing the pre-impregnated material obtained in step b) in a mould, at 80 to 200 °C.

**13.** Process for the production of the composite material of claim 1, characterized by the following three steps:
a) Condensing a polyisocyanate with a polyol having a functionality of at least 2, in a polyisocyanate/polyol equivalent ratio of higher than 2, whereby a stable and fluid mixture is obtained which contains free polyisocyanate and an NCO-terminated urethane compound;
b) Mixing the mixture obtained in step a) with a cross-linking catalyst which is active at temperatures higher than 80 °C and impregnating the resulting mixture with at least one reinforcing material, whereby a pre-impregnated material is obtained;
c) Polymerizing the pre-impregnated material obtained in step b) in a mould, at 80 to 200 °C.

**14.** Process according to claim 13, wherein the polymerization temperature in step c) is from 100 to 150 °C. fillers and/or plastic or elastomeric materials, optionally cross-linked.

**15.** Process according to any one of claims 13 and 14, wherein the condensation of the polyisocyanate with the polyol according to step a) is conducted at a temperature ranging from 50 to 90 °C for a period of time of from 5 minutes to 3 hours.

**16.** Process according to claim 15 wherein the condensation is carried out under vacuum or in an inert atmosphere.

**17.** Process according to any one of claims 13 to 16 wherein, in step a), a mixture of two triols having a mean molecular weight of from 250 to 10000 is utilized as polyol, in which mixture

i) the first triol, having a lower mean molecular weight than the second triol, is composed of glycerin and/or trimethylolpropane condensed with propylene oxide and/or ethylene oxide; and

ii) the second triol, having a higher mean molecular weight than the first triol, is composed of glycerin and/or trimethylolpropane etherified with mixed oxyethylene-oxypropylene chains, with weight ratios of propylene oxide to ethylene oxide varying from 95/5 to 20/80;

the weight ratio of first to second triol ranging from 70:30 to 10:90.

**18.** Process according to claim 17, wherein a mixture of two triols having a mean molecular weight of from 250 to 7000 is utilized as polyol.

**19.** Process according to any one of claims 13 to 18 wherein, during step b), the prepolymer is also mixed with a plastic or elastomeric, optionally cross-linked material, preferably selected from ABS resins, polycarbonates, polyesters, elastomeric polyesters, polyamides, butadiene or isoprene rubbers, butyl rubbers, nitrile rubbers, ethylene/propylene rubbers and acrylic rubbers in the form of particles having a mean diameter of from 0.01 to 10 $\mu$m.

**20.** Process for the production of the composite material according to claim 1, characterized in that it comprises:

a) Preparing a mixture containing a polyisocyanate of formula (IV):

$OCN\text{-}R_1\text{-}NCO$ (IV)

a urethane compound of formula (V):

$OCN\text{-}R_1\text{-}NH\text{-}CO\text{-}OR_2\text{-}(\text{-}OCO\text{-}NH\text{-}R_1\text{-}NCO)_n$ (V)

wherein $R_1$, $R_2$ and n are as defined in claim 1, and one or more reinforcing materials, optionally along with organic and/or inorganic fillers and with plastic and/or elastomeric materials;

b) Adding a cross-linking catalyst which is active at a temperature above 80 °C; and

c) Heating the resulting mixture to a temperature ranging from 80 to 220 °C.

**21.** Process according to any one of claims 13 to 20, wherein the catalyst, active at temperatures above 80 °C, is selected from compounds of lead or bismuth or from organic or metallorganic compounds of Ti, V, Co, Ni and Sn, optionally in admixture with amines.

**22.** Process according to claim 21, wherein the catalyst is selected from lead stearate, lead oleate and lead 2-ethylhexanoate.

**Patentansprüche**

**1.** Verbundmaterial auf der Basis von Polvisocyanuraten und verstärkende Füllstoffe enthaltend, in welchem die Polyisocyanuratmatrix von einer sich wiederholenden Struktureinheit mit der Formel:

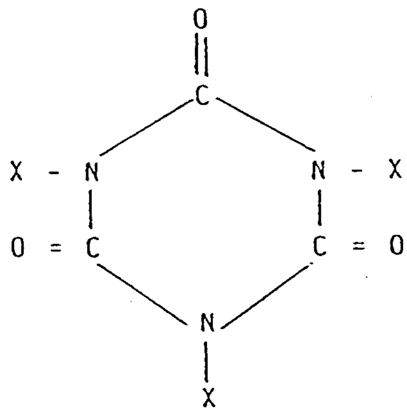

(I)

abgeleitet ist, worin im Durchschnitt wenigstens eine Gruppe X für die Gruppe $-R_1-NCO$ steht und wenigstens eine Gruppe X für die Gruppe $-R_1-NH-CO-OR_2-(-OCO-NH-R_1-NCO)_n$ steht, worin n eine ganze Zahl von 1 bis 8 ist, $R_1$ eine aliphatische, cycloaliphatische, aromatische oder entsprechende gemischte Gruppe, die bis zu 20 Kohlenstoffatome enthält, ist, und $R_2$, gleich oder verschieden von $R_1$, eine aliphatische, cycloaliphatische, aromatische oder entsprechende gemischte Gruppe, die bis zu 20 Kohlenstoffatome enthält, oder auch eine carbonische, Siloxan-, Silan- oder entsprechende gemischte Gruppe darstellt;

und erhältlich ist durch ein Verfahren, das die folgenden Stufen umfaßt:

a) Kondensation eines Polyisocyanats mit einem Polyol mit einer Funktionalität von wenigstens 2, in einem Polyisocyanat/Polyol-Äquivalentverhältnis vonhöher als 2, wodurch eine stabile und fluide Mischung erhalten wird, welche freies Polyisocyanat und Urethanverbindung mit endständigem NCO enthält;

b) Mischen der in Stufe a) erhaltenen Mischung mit einem Vernetzungskatalysator, der bei Temperaturen von höher als 80 °C aktiv ist, und Imprägnieren der resultierenden Mischung mit wenigstens einem verstärkenden Material, wodurch ein vorimprägniertes Material erhalten wird;

c) Polymerisation des in Stufe b) vorimprägnierten Materials in einer Form bei 80 bis 200 °C.

**2.** Verbundmaterial nach Anspruch 1, worin n im Bereich von 1 bis 3 liegt.

**3.** Verbundmaterial nach irgendeinen der Ansprüche 1 und 2, in welchem in der sich wiederholenden Struktureinheit der Formel (I) im Durchschnitt zwei Gruppen X die Gruppe $-R_1-NCO$ darstellen und eine Gruppe X für die Gruppe $-R_1-NH-CO-OR_2-(-OCO-NH-R_1-NCO)_n$ steht.

**4.** Verbundmaterial nach irgendeinem der Ansprüche 1 bis 3, in welchem die Menge an verstärkenden Füllstoffen im Bereich von 5 bis 85 Gew.-%, bezogen auf das Gesamtgewicht des Verbundmaterials, liegt.

**5.** Verbundmaterial nach Anspruch 4, worin die Menge an verstärkenden Füllstoffen im Bereich von 30 bis 70 Gew.-% liegt.

**6.** Verbundmaterial nach irgendeinem der vorangehenden Ansprüche mit den folgenden Eigenschaften:

| | |
|---|---|
| elastisches Biegemodul | ≧ 4000 $N/mm^2$ |
| IZOD-Zähigkeit | ≧ 100 J/m. |

**7.** Verbundmaterial nach Anspruch 6, mit den folgenden Eigenschaften:

| | |
|---|---|
| Biegemodul | ≧ 5000 $N/mm^2$ |
| IZOD-Zähigkeit | ≧ 200 J/m. |

**8.** Verbundmaterial nach Anspruch 6 oder 7, in welchem die Formbeständigkeitstemperatur > 150 ° C ist.

**9.** Verbundmaterial nach irgendeinem der vorangehenden Ansprüche, worin die verstärkenden Füllstoffe ausgewählt sind aus Glasfasern und/oder -Gewirken, Kohlenstoffasern, Polyamidfasern, insbesondere Fasern von aromatischen Polyamiden, kristallinen Polyolefinfasern, Polyesterfasern und Steinwolle.

**10.** Verbundmaterial nach irgendeinem der vorangehenden Ansprüche, worin die verstärkenden Füllstoffe aus gehackten Glasfasern mit einem durchschnittlichen Durchmesser von 8 bis 30 µm und einer durchschnittlichen Länge von 1 bis 100 mm bestehen.

**11.** Verbundmaterial nach Anspruch 10, worin die gehackten Glasfasern einen durchschnittlichen Durchmesser von 10 bis 18 µm und/oder eine durchschnittliche Länge von 5 bis 50 mm aufweisen.

**12.** Verbundmaterial nach irgendeinem der vorangehenden Ansprüche, die zusätzlich organische und/oder anorganische Füllstoffe und/oder Kunststoff- oder elastomere Materialien, gegebenenfalls vernetzt, enthalten.

**13.** Verfahren zur Herstellung des Verbundmaterials von Anspruch 1, gekennzeichnet durch die folgenden drei Stufen:

a) Kondensation eines Polyisocyanats mit einen Polyol mit einer Funktionalität von wenigstens 2, in einem Polyisocyanat/Polyol-Äquivalentverhältnis von grösser als 2, wodurch eine stabile und fluide Mischung erhalten wird, die freies Polyisocyanat und ein Urethanverbindung mit NCO-Endgruppen enthält;

b) Mischen der in Stufe a) erhaltenen Mischung mit einem Vernetzungskatalysator, der bei einer Temperatur höher als 80 ° C aktiv ist, und Imprägnieren der resultierenden Mischung mit wenigstens einem verstärkenden Material, wodurch ein vorimprägniertes Material erhalten wird;

c) Polymerisation des in Stufe b) erhaltenen vorimprägnierten Materials in einer Form bei 80 bis 200 ° C.

**14.** Verfahren nach Anspruch 13, worin die Polymerisationstemperatur in Stufe c) 100 bis 150 ° C beträgt.

**15.** Verfahren nach irgendeinem der Ansprüche 13 und 14, worin die Kondensation des Polyisocyanats mit dem Polyol gemäß Stufe a) bei einer Temperatur im Bereich von 50 bis 90 ° C für eine Zeitspanne von 5 Minuten bis 3 Stunden durchgeführt wird.

**16.** Verfahren nach Anspruch 15, worin die Kondensation unter Vakuum oder in einer inerten Atmosphäre durchgeführt wird.

**17.** Verfahren nach irgendeinem der Ansprüche 13 bis 16, worin in Stufe a) eine Mischung von 2 Triolen mit einem durchschnittlichen Molekulargewicht von 250 bis 10000 als Polyol verwendet wird, wobei in dieser Mischung

i) das erste Triol mit einen niedrigeren durchschnittlichen Molekulargewicht als das zweite Triol aus Glycerin und/oder Trimethylolpropan, mit Propylenoxid und/oder Ethylenoxid kondensiert, zusammengesetzt ist; und

ii) das zweite Triol mit einem höheren durchschnittlichen Molekulargewicht als das erste Triol aus Glycerin und/oder Trinethylolpropan, mit gemischten Oxyethylenoxypropylenketten verethert, wobei die Gewichtsverhältnisse von Propylenoxid zu Ethylenoxid von 95/5 bis 20/80 variieren, zusammengesetzt ist;

wobei das Gewichtsverhältnis von ersten zu zweitem Triol im Bereich von 70:30 bis 10:90 liegt.

**18.** Verfahren nach Anspruch 17, worin eine Mischung von zwei Triolen mit einem durchschnittlichen Molekulargewicht von 250 bis 7000 als Polyol eingesetzt wird.

**19.** Verfahren nach irgendeinem der Ansprüche 13 bis 18, worin während Stufe b) das Präpolymere auch mit einem Kunststoff- oder elastomeren, gegebenenfalls vernetzten Material, vorzugsweise ausgewählt aus ABS-Harzen, Polycarbonaten, Polyestern, elastomeren Polyestern, Polyamiden, Butadien- oder Isopren-Kautschuken, Butyl-Kautschuken, Nitril-Kautschuken, Ethylen/Propylen-Kautschuken und Acryl-Kautschuken in Form von Teilchen mit einem durchschnittlichen Durchmesser von 0,01 bis 10 µm,

gemischt wird.

**20.** Verfahren zur Herstellung des Verbundmaterials nach Anspruch 1, dadurch gekennzeichnet, daß es umfaßt:
a) Herstellung einer Mischung, die enthält ein Polyisocyanat der Formel (IV):

$OCN-R_1-NCO$ (IV)

eine Urethanverbindung der Formel (V):

$OCN-R_1-NH-CO-OR_2-(-OCO-NH-R_1-NCO)_n$ (V)

worin $R_1$, $R_2$ und n wie in Anspruch 1 definiert sind,
und ein oder mehr verstärkende Materialien, gegebenenfalls zusammen mit organischen und/oder anorganischen Füllstoffen und mit Kunststoff- und/oder elastomeren Materialien;
b) Zugabe eines Vernetzungskatalysators, der bei einer Temperatur oberhalb von 80 °C aktiv ist; und
c) Erhitzen der resultierenden Mischung auf eine Temperatur im Bereich von 80 bis 220 °C.

**21.** Verfahren nach irgendeinem der Ansprüche 13 bis 20, worin der Katalysator, der bei Temperaturen oberhalb von 80 °C aktiv ist, aus Verbindungen von Blei oder Wismuth oder aus organischen oder metallorganischen Verbindungen von Ti, V, CO, Ni und Sn, gegebenenfalls in Mischung mit Aminen, ausgewählt wird.

**22.** Verfahren nach Anspruch 21, worin der Katalysator aus Bleistearat, Bleioleat und Blei-2-ethylhexanoat ausgewählt wird.

**Revendications**

**1.** Matériau composite à base de polyisocyanurates et contenant des charges de renforcement, dans lequel la matrice de polyisocyanurate dérive d'une unité structurale répétée ayant la formule:

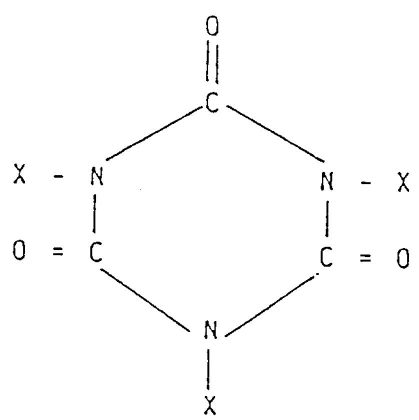

(I)

dans laquelle, en moyenne, au moins un groupe X représente le groupe:

$-R_1-NCO$

et au moins un groupe X représente le groupe:

$-R_1-NH-CO-OR_2-(-OCO-NH-R_1-NCO)_n$

dans lequel:
n est un entier de 1 à 8,
$R_1$ est un groupe aliphatique, cycloaliphatique, aromatique ou mélangé correspondant contenant jusqu'à 20 atomes de carbone, et
$R_2$ identique ou différent de $R_1$, est un groupe aliphatique, cycloaliphatique, aromatique ou

mélangé correspondant, contenant jusqu'à 20 atomes de carbone, ou également, un groupe carbonique, siloxane, silane ou mélangé correspondant;

et peut être obtenu par un procédé comprenant les étapes suivantes:

a) condensation d'un polyisocyanate avec un polyol ayant une fonctionnalité d'au moins 2, selon un rapport équivalent polyisocyanate/polyol supérieur à 2, de façon à fournir un mélange stable et fluide qui contient du polyisocyanate libre et un composé uréthane à terminaison NCO;

b) mélange du produit obtenu dans l'étape a) avec un catalyseur de réticulation qui est actif à des températures supérieures à 80 °C et imprégnation du mélange résultant avec au moins un matériau de renforcement, de façon à obtenir un matériau préimprégné;

c) polymérisation du matériau préimprégné obtenu dans l'étape b) dans un moule, à une température comprise entre 80 et 200 °C.

**2.** Matériau composite suivant la revendication 1, dans lequel n est de l'ordre de 1 à 3.

**3.** Matériau composite suivant l'une quelconque des revendications 1 et 2, dans lequel, en moyenne, deux groupes X représentent le groupe $-R_1-NCO$ et un groupe X représente le groupe $-R_1-NH-CO-OR_2-(-OCO-NH-R_1-NCO)_n$ dans l'unité structurale répétée de formule (I).

**4.** Matériau composite suivant l'une quelconque des revendications 1 à 3, dans lequel la quantité de charges du renforcement est de l'ordre de 5 à 85% en poids par rapport au poids total du matériau composite.

**5.** Matériau composite suivant la revendication 4, dans lequel la quantité de charges de renforcement est de l'ordre de 30 à 70% en poids.

**6.** Matériau composite suivant l'une quelconque des revendications précédentes, présentant les caractéristiques suivantes:

| | |
|---|---|
| Module d'élasticité à la flexion | ≧ 4000 N/mm$^2$ |
| Elasticité Izod | ≧ 100 J/m |

**7.** Matériau composite suivant la revendication 6, ayant les caractéristiques suivantes:

| | |
|---|---|
| Module d'élasticité à la flexion | ≧ 5000 N/mm$^2$ |
| Elasticité Izod | ≧ 200 J/m |

**8.** Matériau composite suivant les revendications 6 ou 7, dans lequel la température de déformation à la chaleur est supérieure à 150 °C.

**9.** Matériau composite suivant l'une quelconque des revendications précédentes, dans lequel les charges de renforcement sont choisies parmi des fibres et/ou tissu de verre, des fibres de carbone, des fibres polyamide, en particulier des fibres de polyamides aromatiques, des fibres polyoléfiniques cristallines, des fibres polyester et une laine minérale.

**10.** Matériau composite suivant l'une quelconque des revendications précédentes, dans lequel ces charges de renforcement consistent en fibres de verre coupées ayant un diamètre moyen de 8 à 30 µm et une longueur moyenne de 1 à 100 mm.

**11.** Matériau composite suivant la revendication 10, dans lequel les fibres de verre coupées ont un diamètre moyen de 10 à 18 µm et/ou une longueur moyenne de 5 à 50 mm.

**12.** Matériau composite suivant l'une quelconque des revendications précédentes, contenant de plus des charges organiques et/ou inorganiques et/ou des matières plastique ou élastomère, éventuellement réticulées.

**13.** Procédé pour la production du matériau composite suivant la revendication 1, caractérisé par les trois étapes suivantes:

a) la condensation d'un polyisocyanate avec un polyol ayant une fonctionnalité d'au moins 2, selon un rapport équivalent polyisocyanate/polyol supérieur à 2, de façon à obtenir un mélange fluide et stable qui contient du polyisocyanate libre et un composé uréthane à terminaison NCO;

b) le mélange du produit obtenu dans l'étape a) avec un catalyseur de réticulation qui est actif à des températures supérieures à 80 ° C et l'imprégnation du mélange résultant avec au moins un matériau de renforcement, de façon à obtenir un matériau préimprégné;

c) la polymérisation du matériau préimprégné obtenu dans l'étape b) dans un moule, à une température comprise entre 80 et 200 ° C.

**14.** Procédé suivant la revendication 13, dans lequel la température de polymérisation utilisée dans l'étape c) est de 100 à 150 ° C.

**15.** Procédé suivant l'une quelconque des revendications 13 et 14, dans lequel la condensation du polyisocyanate avec le polyol suivant l'étape a) est conduite à une température de l'ordre de 50 à 90 ° C pendant une période de temps de 5 minutes à 3 heures.

**16.** Procédé suivant la revendication 15, dans lequel la condensation est effectuée sous vide ou en atmosphère inerte.

**17.** Procédé suivant l'une quelconque des revendications 13 à 16, dans lequel, dans l'étape a), un mélange de deux triols ayant un poids moléculaire moyen de 250 à 10000 est utilisé en tant que polyol, dans lequel mélange:

i) le premier triol ayant un poids moléculaire inférieur à celui du second triol est composé de glycérine et/ou de triméthylolpropane condensé avec de l'oxyde de propylène et/ou de l'oxyde d'éthylène; et

ii) le second triol ayant un poids moléculaire supérieur à celui du premier triol, est composé de glycérine et/ou de triméthylolpropane éthérifié avec des chaînes oxyéthylène-oxypropylène mélangées, le rapport en poids de l'oxyde de propylène à l'oxyde d'éthylène variant entre 95/5 et 20/80;

le rapport en poids du premier au second triol étant de l'ordre de 70/30 à 10/90.

**18.** Procédé suivant la revendication 17, dans lequel un mélange de deux triols ayant un poids moléculaire moyen de 250 à 7000 est utilisé comme polyol.

**19.** Procédé suivant l'une quelconque des revendications 13 à 18, dans lequel, au cours de l'étape b), le prépolymère est également mélangé avec une matière plastique ou élastomère, éventuellement réticulée, de préférence choisie parmi les résines ABS, polycarbonates, polyesters, polyesters élastomères, polyamides, caoutchoucs butadiène ou isoprène, caoutchoucs butyle, caoutchoucs nitrile, caoutchoucs éthylène/propylène et caoutchoucs acryliques sous la forme de particules ayant un diamètre moyen de 0,01 à 10 $\mu$m.

**20.** Procédé pour la production de matériau composite suivant la revendication 1, caractérisé en ce qu'il comprend:

a) la préparation d'un mélange contenant un polyisocyanate de formule (IV):

$$OCN\text{-}R_1\text{-}NCO \qquad (IV)$$

un composé uréthane de formule (V):

$$OCN\text{-}R_1\text{-}NH\text{-}CO\text{-}OR_2\text{-}(\text{-}OCO\text{-}NH\text{-}R_1\text{-}NCO)_n \qquad (V)$$

dans laquelle $R_1$ et $R_2$ sont tels que définis dans la revendication 1, et un ou plusieurs matériaux de renforcement, éventuellement avec des charges organiques et/ou inorganiques et avec des matières plastique et/ou élastomère;

b) l'addition d'un catalyseur de réticulation qui est actif à une température supérieure à 80 ° C; et

c) le chauffage du mélange résultant à une température de l'ordre de 80 à 220 ° C.

**21.** Procédé suivant l'une quelconque des revendications 13 à 20, dans lequel le catalyseur, actif à des températures supérieures à 80 ° C, est choisi parmi des composés du plomb ou du bismuth ou parmi des composés organiques ou organométalliques du titane, vanadium, cobalt, nickel et étain, éventuellement en mélange avec des amines.

**22.** Procédé suivant la revendication 21, dans lequel le catalyseur est choisi parmi le stéarate de plomb, l'oléate de plomb et le 2-éthylhexanoate de plomb.